# EUROPEAN PATENT APPLICATION

(11) **EP 4 585 639 A1**
(43) Date of publication of application: **16.07.2025**
(21) Application number: 23862520.6
(22) Date of filing: 08.09.2023
(51) Int. Cl.: C08K 3/04, C08L 79/08, C08G 73/10, C08J 9/28, C09K 5/06, C08L 33/02, C08L 33/24

(54) **COMPOSITE AEROGEL, RECYCLABLE HEAT-STORAGE PHASE-CHANGE COMPOSITE MATERIAL WITH PHOTOTHERMAL CONVERSION FUNCTION, AND PREPARATION METHODS THEREFOR AND USE**

(30) Priority: 09.09.2022 CN 202211101221
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: GUO, Zhaoyan, Beijing 100013 (CN); LI, Binghai, Beijing 100013 (CN); LIU, Wenlu, Beijing 100013 (CN); RU, Yue, Beijing 100013 (CN); YAO, Yuan, Beijing 100013 (CN); QIAO, Jinliang, Beijing 100013 (CN); QI, Guicun, Beijing 100013 (CN); KONG, Dehui, Beijing 100013 (CN); HU, Chenxi, Beijing 100013 (CN); LIU, Zhenjie, Beijing 100013 (CN); GAO, Yi, Beijing 100013 (CN); LAI, Jinmei, Beijing 100013 (CN); WANG, Xiang, Beijing 100013 (CN); ZHANG, Xiaohong, Beijing 100013 (CN)
(74) Representative: Hoffmann Eitle
(86) International application number: PCT/CN2023/117746
(87) International publication number: WO 2024/051826

(57) **Abstract**

The present invention relates to the field of phase-change materials, and specifically relates to a composite aerogel, a recyclable heat-storage phase-change composite material with a photothermal conversion function, and preparation methods therefor and the use thereof. The composite aerogel comprises a polymer and graphene, wherein the polymer contains a maleic-anhydride-group-containing structural unit and a maleimide-group-containing structural unit. The composite aerogel can be used as a carrier to load a phase-change material, so as to obtain a recyclable heat-storage phase-change composite material, which has a photothermal conversion function and can also be recycled by using a simple and environmentally friendly method. The recyclable heat-storage phase-change composite material comprises a composite aerogel and a phase-change material loaded in the composite aerogel. The recyclable heat-storage phase-change composite material with a photothermal conversion function of the present invention not only has a photothermal conversion function, but is also low in terms of leakage of the phase-change material and can also be recycled, such that the environmentally friendly utilization and effective storage of solar energy are truly realized, and the material has a high application value in the aspect of utilizing clean energy in an environmentally friendly manner.

## Description

### Technical field

The present invention relates to a field of phase-change materials, and particularly relates to a composite aerogel, a recyclable heat-storage phase-change composite material with photothermal conversion function and a preparation method and an application thereof.

### Background art

With the rapid increase in energy consumption and greenhouse gas emissions, the use of renewable energy sources such as solar energy and waste heat in an environmentally friendly manner is of great interest. As solar energy varies over time and space, the mismatch in energy supply and demand makes efficient storage of these energy sources an important issue. Latent heat-storage systems based on organic phase-change materials have large storage capacities, near constant phase-change temperatures and reversible storage and release of thermal energy. By means of phase-change materials, the huge gap between rapidly growing energy demand and limited fossil resource reserves can be closed. Therefore, phase-change materials are now widely used in air conditioning systems, building materials, solar energy storage, waste heat recycle and various electronic products. Organic phase-change materials, which have the advantages of stable performance, low supercooling degree, no phase separation and the like, are the most widely researched phase-change materials, mainly including paraffins, fatty acids, fatty alcohols and other organic compounds. However, organic phase-change materials are subject to the risk of leakage when used directly as energy storage materials, and it is essential that the phase-change materials are encapsulated to prevent leakage problems. In addition, it is also necessary to consider reprocessability and recyclability of organic phase-change materials, so as to avoid environmental pollution and resource waste caused by them.

Therefore, if a material with photothermal conversion performance is provided, combined with a phase-change material to obtain a recyclable cold-storage phase-change composite material with good photothermal conversion performance, low leakage of phase-change material and recyclability, it will achieve a major breakthrough in this field.

### Contents of the invention

In view of the technical problems existing in the prior art, an object of the present invention is to provide a composite aerogel, a recyclable heat-storage phase-change composite material with photothermal conversion function, a preparation method and an application thereof. The composite aerogel can be used as a carrier to load a phase-change material so as to obtain a recyclable heat-storage phase-change composite material with photothermal conversion function. At the same time, it can also be recovered in a simple and environmentally friendly manner. The recyclable heat-storage phase-change composite material with photothermal conversion function not only has photothermal conversion function, but also has low leakage and can be recycled at the same time, truly realizing the environmentally friendly utilization and effective storage of solar energy.

The inventors of the present invention found that maleimide-based copolymers (polymers containing a maleic anhydride group and a maleimide group) can be prepared by low-cost copolymers and can be recovered by aqueous ammonia. In view of the prior art, the applicant of the present invention found in the research that a composite aerogel of a maleimide-based copolymer and a reduced graphene oxide can be prepared by mixing such copolymer with a graphene oxide and a reducing agent. Preferably, by reducing the aerogel rapidly and efficiently under microwave, a water-resistant maleimide-based copolymer-graphene composite aerogel can be obtained. The composite aerogel can be used, as a carrier of a phase-change material, to prevent leakage of the phase-change material, and can be recycled under the action of aqueous ammonia to obtain the graphene, the phase-change material and the polymer respectively. In summary, the present invention is intended to realize the leakage prevention and recycle of a phase-change material with photothermal conversion function, and to provide a composite aerogel suitable for use as a carrier of a phase-change material, and a recyclable heat-storage phase-change composite material with photothermal conversion function and a preparation method and an application thereof.

A first aspect of the present invention is to provide a composite aerogel, comprising a polymer and a graphene, wherein the polymer contains a maleic anhydride group-containing structural unit and a maleimide group-containing structural unit. The composite aerogel can be used as a carrier to obtain, together with a phase-change material, a recyclable heat-storage phase-change composite material with photothermal conversion function, and at the same time, it can also be recycled in a simple and environmentally friendly manner.

In a preferred embodiment of the present invention, an average value of I_{D}/I_{G} in a Raman spectrum on the surface of the composite aerogel is 1.2 or less, preferably 0.9 or less, and more preferably 0.85 or less.

According to the present invention, a mass ratio of the graphene to the polymer can be selected within a wide range, and in a preferred embodiment of the present invention, the mass ratio of the graphene to the polymer is (1: 20) - (10: 1), preferably (1: 10) - (6: 1), more preferably (1: 5) - (1: 1), i.e. 1: (1-5). For example, it may be a ratio of 1 to 1, 2, 3, 4, 5, as well as any two numerical values or any intervals between any two numerical values.

According to the present invention, the polymer in the composite aerogel is capable of being dissolved in aqueous ammonia at 0-150°C to form a polymer aqueous solution.

In a preferred embodiment of the present invention, in the raw materials for preparing the composite aerogel of the present invention, the graphene is derived from reduction of a graphene oxide, where the graphene oxide needs to be pre-reduced using a reducing agent first and then reduced under microwave. Namely, the graphene is obtained by reducing a graphene oxide, preferably, by pre-reducing graphene oxide using a reducing agent first and then reducing under microwave.

According to the present invention, the reducing agent can be selected within a wide range, and in a preferred embodiment of the present invention, the reducing agent is selected from at least one of ascorbic acid, gallic acid, sodium borohydride, amino acid.

According to the present invention, maleic anhydride group refers to 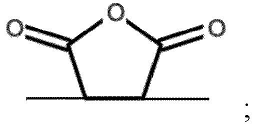 maleimide group refers to

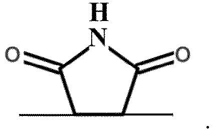

According to the present invention, the polymer is a carbon chain polymer in which the heteroatoms O and N are present in the pendant groups.

In a preferred embodiment of the present invention, a mole proportion of the maleimide group-containing structural unit in the polymer is 5%-70%, preferably 10%-60%, more preferably 20%-50%, such as 20%, 25%, 30%, 35%, 40%, 45%, 50%, as well as any two numerical values or any intervals between any two numerical values, based on 100% of the total mole amount of the maleic anhydride group-containing structural unit and the maleimide group-containing structural unit.

According to the present invention, the polymer can be selected within a wide range, and in a preferred embodiment of the present invention, the polymer is derived from a polymer raw material containing one or more of maleic anhydride-, maleimide-, maleic acid and its ammonium salt-, maleamic acid and its ammonium salt-group-containing structural units; that is, the maleic anhydride group and maleimide group in the polymer aerogel are derived from at least one of the maleic anhydride group, the maleimide group, the maleic acid and its ammonium salt group, the maleamic acid and its ammonium salt group in the polymer raw material.

The maleic anhydride group refers to 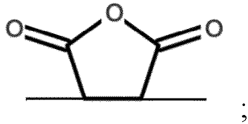 the maleimide group refers to 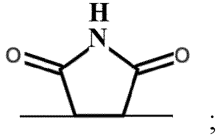 the maleic acid and its ammonium salt group, the maleamic acid and its ammonium salt group refer to 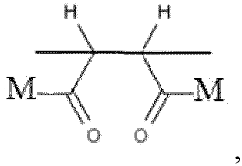 wherein M is the same or different, each of which is hydroxyl or amino or ammonium (O-NH₄).

According to the present invention, the polymer is a carbon chain polymer in which the heteroatoms O and N are present in the pendant groups.

In the present invention, the polymer raw material includes, but not limited to, a copolymer of a polymerizable monomer including one or more of maleic anhydride, maleimide, maleic acid and its ammonium salt, maleamic acid and its ammonium salt with an olefin monomer. The present invention can also be achieved, for example, when the polymer raw material is styrene-maleic anhydride-vinyl silicone oil copolymer. The above-mentioned copolymer of a polymerizable monomer including one or more of maleic anhydride, maleimide, maleic acid and its ammonium salt, maleamic acid and its ammonium salt with an olefin monomer has a lower raw material cost.

Preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer is at least one of α-methyl styrene, styrene, isobutylene; more preferably, the polymer raw material is an alternating copolymer of a polymerizable monomer including one or more of maleic anhydride, maleimide, maleic acid and its ammonium salt, maleamic acid and its ammonium salt with one of α-methyl styrene, styrene, isobutylene.

By way of example, the polymer raw material in the present invention includes, but not limited to, at least one of styrene-maleic anhydride copolymer, maleic anhydride-isobutylene copolymer. Preferably, the polymer raw material is styrene-maleic anhydride copolymer.

In a preferred embodiment of the present invention, the composite aerogel is capable of being dissolved in aqueous ammonia at 0-150°C to form a polymer aqueous solution. Based on this, the polymer aerogel of the present invention can be conveniently recycled in an environmentally friendly manner.

According to the present invention, the polymer in the composite aerogel has good heat resistance, and still has good heat resistance after recycle, which is very suitable for photothermal conversion heat-storage carrier.

In a preferred embodiment of the present invention, the composite aerogel is prepared by reacting a polymer raw material containing one or more of maleic anhydride-, maleimide-, maleic acid and its ammonium salt-, maleamic acid and its ammonium salt-group-containing structural units with aqueous ammonia under a closed condition, then mixing with a graphene oxide and a reducing agent, pre-freezing, freeze-drying, dehydrating and deaminating, and reducing.

A second aspect of the present invention is to provide a preparation method of the composite aerogel described in the first aspect, which comprises reacting a polymer raw material containing one or more of maleic anhydride-, maleimide-, maleic acid and its ammonium salt-, maleamic acid and its ammonium salt-group-containing structural units with aqueous ammonia under a closed condition, then mixing with a graphene oxide and a reducing agent, pre-freezing, freeze-drying, dehydrating and deaminating, and reducing to obtain the composite aerogel.

No cross-linking agent is added in the preparation method of the composite aerogel of the present invention.

In a preferred embodiment of the present invention, the preparation method comprises the steps of:
(1) reacting the polymer raw material with aqueous ammonia under a closed condition to obtain a polymer aqueous solution;
(2) mixing the polymer aqueous solution obtained in step (1) with a graphene oxide and a reducing agent to obtain a mixed liquor, then pre-freezing and freeze-drying the mixed liquor, to obtain a composite polymer;
(3) dehydrating and deaminating the composite polymer obtained in step (2) through heat treatment, and then reducing under microwave irradiation, to obtain the maleimide copolymer-graphene composite aerogel.

According to the present invention, the amounts of the polymer raw material, aqueous ammonia and the like in step (1) can be selected within a wide range, and in a preferred embodiment of the present invention, based on 100% of the total mass of the reaction system, the mass fraction of the polymer raw material is 0.1%-30%, preferably 0.5%-10%, more preferably 1%-5%, and the mass fraction of ammonia in the raw material, by mass of ammonia in aqueous ammonia, is 0.001%-30%, preferably 0.01%-10%, more preferably 0.1%-1%, the balance being water.

According to the present invention, the reaction conditions and the like in step (1) may be selected within a wide range, and in a preferred embodiment of the present invention, the reaction conditions include that: the reaction temperature is 0-200°C, preferably 50-150°C, more preferably 80-100°C, and/or, the reaction time is 0.01-100 h, preferably 0.5-10 h, more preferably 1-5 h. The reaction pressure is not particularly limited, and the reaction is preferably carried out under normal pressure.

According to the present invention, the conditions in step (2) can be selected within a wide range, and in a preferred embodiment of the present invention, in step (2): the graphene oxide is derived from a dispersion containing the graphene oxide, and the concentration of the graphene oxide in the dispersion (i.e. the mass ratio of the graphene oxide to water) is 1-100 mg/mL, preferably 3-30 mg/mL, more preferably 5-20 mg/mL.

According to the present invention, the reducing agent can be selected within a wide range, and in a preferred embodiment of the present invention, the reducing agent is selected from at least one of ascorbic acid, gallic acid, sodium borohydride, amino acid.

According to the present invention, the mass ratio of the reducing agent to the graphene oxide can be selected within a wide range, and in a preferred embodiment of the present invention, the mass ratio of the reducing agent to the graphene oxide is 1: (0.1-20), preferably 1: (1-3), and may be, for example, a ratio of 1 to 1, 1.5, 2, 2.5, 3, as well as any two numerical values or any intervals between any two numerical values.

According to the present invention, the polymer aerogel in the present invention may be an anisotropic aerogel or an isotropic aerogel.

The difference between the anisotropic aerogel and the isotropic aerogel is that the pore structure is different. The pore structure of the anisotropic aerogel shows a long-range order, which is mainly due to the directional growth of ice crystals in the pre-freezing stage of the aerogel. During the growth process, impurities are discharged, and accumulated to form a pore wall. Therefore, an anisotropic aerogel can be obtained using different cold source temperatures in a single direction during pre-freezing. There are many options for implementing the cold source temperatures in a single direction, including, but not limited to, in pre-freezing, with the use of liquid nitrogen as a low-temperature cold source, placing a mold containing a mixed liquor of polymer aqueous solution, graphene oxide and reducing agent on a copper column immersed in liquid nitrogen, so that ice crystals grow upward from the bottom of the mold.

The anisotropic aerogel is featured with different pore structures of the aerogel, different axial and radial thermal conductivity coefficients, as well as different mass and sound transmission rates. The anisotropic aerogel/isotropic aerogel can be selected according to different application conditions. For example, the inventors of the present invention found that in the present invention while the phase-change material is encapsulated, the leakage can be significantly reduced by using the preferred anisotropic aerogel, and there is no requirement for the direction of the anisotropic aerogel.

According to the present invention, the cold source temperatures in various directions of the mixed liquor during pre-freezing are the same or different, and in a preferred embodiment of the present invention, the cold source temperatures in various directions of the mixed liquor during pre-freezing are different, preferably, the cold source temperatures in a single direction of the mixed liquor (i.e., the mixed aqueous solution of the copolymer obtained after the amination reaction with the graphene and the reducing agent) during pre-freezing are different. In this preferred embodiment, the leakage of the phase-change material is lower.

Preferably, the cold source temperatures in a single direction during pre-freezing are different, such that the anisotropic aerogel can be obtained. There are many options for implementing the cold source temperatures in a single direction, including, but not limited to, in pre-freezing, with the use of liquid nitrogen as a low-temperature cold source, placing a mold on a copper column immersed in liquid nitrogen, so that ice crystals grow upward from the bottom of the mold.

Specifically, the pre-freezing conditions may be conventional temperature conditions in the art, and are not particularly limited in the present invention as long as the mixed liquor of the polymer aqueous solution with the graphene oxide and the reducing agent obtained in step (2) is frozen into ice.

According to the present invention, the freeze-drying conditions may be selected within a wide range, and are not particularly limited in the present invention, and in a preferred embodiment of the present invention, the freeze-drying conditions include that: the temperature is -10°C or lower, for example, -20°C or lower, or -30°C or lower, and/or the vacuum degree is 1000 Pa or lower, for example, 100 Pa or lower, or 10 Pa or lower.

The freeze-drying process may be performed using various freeze-drying devices in the prior art, such as a freeze dryer, a freeze spray dryer, an industrial freeze dryer and the like.

According to the present invention, the conditions in step (3) can be selected within a wide range, and in a preferred embodiment of the present invention, the heat treatment conditions in step (3) include that: the temperature is 100-300°C, preferably 120-220°C, more preferably 160-200°C; the heat treatment time is 0.1-10 h, preferably 0.5-3 h, more preferably 1-2 h.

According to the present invention, the microwave irradiation conditions can be selected within a wide range, and in a preferred embodiment of the present invention, the microwave irradiation power is 500-2000 W; the microwave irradiation time is 1-10 s, preferably 2-7 s, more preferably 3-5 s.

According to the present invention, the polymer raw material can be selected within a wide range, and in a preferred embodiment of the present invention, the polymer raw material is capable of being reacted with aqueous ammonia to obtain a water-soluble polymer.

In a preferred embodiment of the present invention, the polymer raw material is a polymer containing one or more of maleic anhydride-, maleimide-, maleic acid and its ammonium salt-, maleamic acid and its ammonium salt-group-containing structural units; preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer comprises at least one of α-methyl styrene, styrene, isobutylene; by way of example, the polymer raw material includes, but not limited to, at least one of styrene-maleic anhydride copolymer, maleic anhydride-isobutylene copolymer.

The above-mentioned polymer raw materials are all polymers which have been disclosed in the prior art, which can be obtained commercially from the prior art or prepared according to the methods disclosed in the prior art.

In the present invention, the material of the closed container is not particularly limited, and the container can be made of metal, nonmetal, polymer or other materials.

The term "and/or" as used herein means that the two conditions before and after "and/or" can be selected alternatively or in combination.

A third aspect of the present invention is to provide a recyclable heat-storage phase-change composite material, which comprises a composite aerogel and a phase-change material loaded in the composite aerogel; the composite aerogel is the composite aerogel described in the first aspect or the composite aerogel prepared by the preparation method described in the second aspect.

According to the present invention, the mass ratio of the composite aerogel to the phase-change material can be selected within a wide range, and in a preferred embodiment of the present invention, the mass ratio of the composite aerogel to the phase-change material is 1: (0.05-50), for example, it can be a ratio of 1 to 0.05, 0.1, 0.5, 1, 5, 10, 20, 30, 40, 50, as well as any two numerical values or any intervals between any two numerical values.

According to the present invention, the phase-change material can be selected within a wide range. The phase-change material is preferably an organic phase-change material and preferably a heat-storage phase-change material, including but not limited to water-soluble phase-change materials and/or non-water-soluble phase-change materials, more preferably at least one of polyethylene glycol, lauric acid, stearyl alcohol, paraffin.

In a preferred embodiment of the present invention, the leakage of the phase-change material in the recyclable heat-storage phase-change composite material is less than 10 wt%, preferably less than 5 wt%, more preferably less than 2 wt% under the temperature conditions where the phase-change material is in a liquid state.

The present invention also provides a method of recycling the composite aerogel or the recyclable heat-storage phase-change composite material, which comprises the steps of mixing-reacting the composite aerogel and/or the recyclable heat-storage phase-change composite material with aqueous ammonia under a closed condition until an aqueous solution containing the recycled polymer is obtained, and removing insoluble substances (the graphene, the phase-change material) to obtain an aqueous solution of the recycled polymer. The aerogel recycling method does not require the introduction of organic solvents, does not require high-temperature and high-pressure stirring treatment, and only requires a certain concentration of aqueous ammonia that is preferably kept below 100°C, which can achieve rapid and efficient recycle. The method is featured with low energy consumption, low pollution, and high efficiency. The recycled polymer solution can be reused for the preparation of a polymer aerogel.

According to the present invention, the mixing-reaction conditions in the recycling method can be selected within a wide range, and in a preferred embodiment of the present invention, the mixing-reaction temperature is 0-200°C, preferably 50-150°C, more preferably 80-100°C and/or, the mixing-reaction time is 0.01-100 h, preferably 0.5-10 h, more preferably 1-5 h. The reaction pressure is not particularly limited, and the reaction is preferably carried out under normal pressure.

In a preferred embodiment of the present invention, the recycling method further comprises reusing the aqueous solution of the recycled polymer, for example, continuing step (2) and subsequent steps of the preparation method described in the second aspect of the present invention to prepare a composite aerogel again.

A fourth aspect of the present invention is to provide a preparation method of the recyclable heat-storage phase-change composite material described in the third aspect, which comprises loading the phase-change material in the composite aerogel.

According to the present invention, the preparation method of the recyclable heat-storage phase-change composite material comprises: obtaining a composite aerogel using the preparation method described in the second aspect; and loading the phase-change material in the composite aerogel. The loading method can be various loading methods existing in the prior art. Specifically, the phase-change material in a molten state can be adsorbed (encapsulated) and/or permeated into the composite aerogel.

According to the present invention, the type, proportion of the phase-change material can be selected within a wide range, and is preferably the type, proportion of the phase-change material described in the third aspect of the present invention.

A fifth aspect of the present invention is to provide an application of the recyclable heat-storage phase-change composite material described in the fourth aspect in the fields of building energy conservation, air conditioning systems, waste heat utilization and solar energy storage.

By virtue of the above technical solutions, the present invention provides a composite aerogel, a recyclable heat-storage phase-change composite material with photothermal conversion function and a preparation method and an application thereof. Compared with the prior art, the present invention has the following advantages:
In the present invention, the composite aerogel is used as a carrier, wherein the graphene endows the phase-change material with photothermal conversion function, so that the aerogel phase-change composite material containing the graphene can be heated up to above 70°C within 30 min under solar illumination, and can keep the temperature above 50°C for a long time, which has good photothermal conversion performance and heat-storage performance. By combining the heat-storage performance of the phase-change material, the recyclable heat-storage phase-change composite material with the photothermal conversion function in the present invention can realize the high-efficiency utilization of solar energy.

The composite aerogel and the recyclable heat-storage phase-change composite material with the photothermal conversion function in the present invention can be recycled in an environmentally friendly manner;

The polymer in the composite aerogel and the recycled polymer both have good heat resistance, at the same time, the porous structure of the composite aerogel makes the leakage of the phase-change material low, all of which provides stability guarantee for photothermal conversion and heat-storage.

In conclusion, the recyclable heat-storage phase-change composite material with photothermal conversion function in the present invention not only has photothermal conversion function, but also has good heat-storage performance. Moreover, the leakage of the phase-change material is low and the overall material can be recycled, truly realizing the environmentally friendly utilization and effective storage of solar energy. It has extremely high application value in the environmentally friendly utilization of clean energy.

### Description of figures

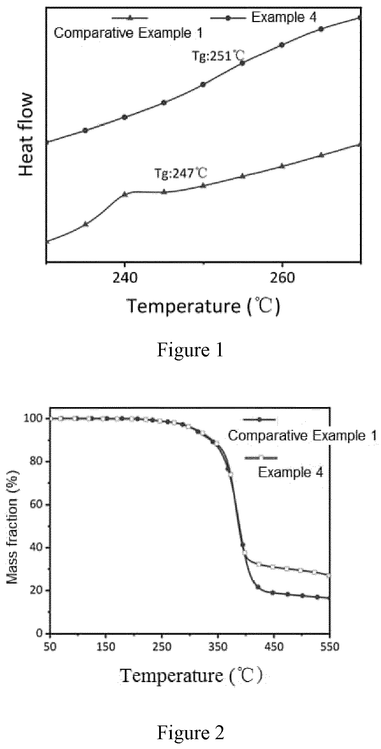

Figure 1 shows DSC curves and glass transition temperatures Tg of the maleimide-based aerogel in Comparative Example 1 and the recycled polymer aerogel in Example 4;
Figure 2 shows thermogravimetric curves of the maleimide-based aerogel in Comparative Example 1 and the recycled polymer aerogel in Example 4;
   The test results of Figure 1 and Figure 2 show that the maleimide-based aerogel has good heat resistance, with a glass transition temperature around 250°C, and a decomposition temperature around 300°C, and the heat resistance of the aerogel prepared using the recycled polymer is higher than that before the recycle, which proves that the polymers before and after the recycle of the aerogel both have good heat resistance, and the recycle process is green and environmentally friendly.

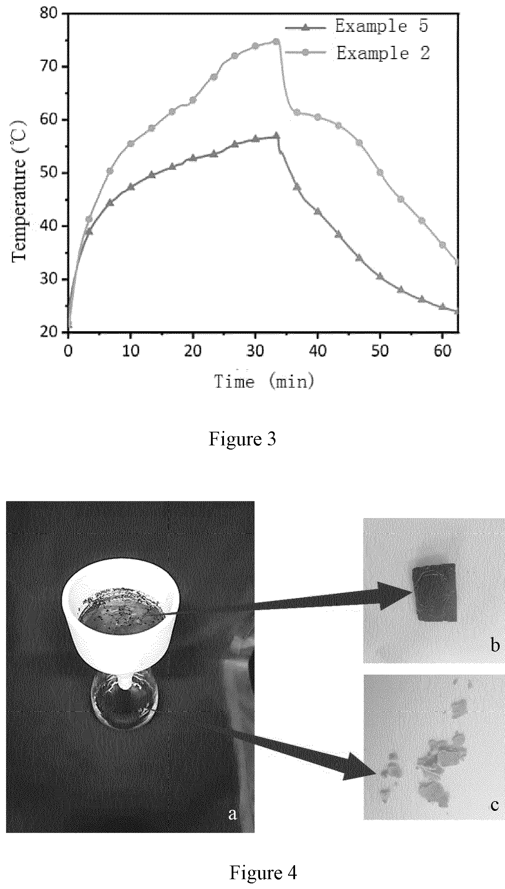

Figure 3 shows temperature curves of the phase-change materials in Example 2 and Example 5 under one solar illumination intensity and after removal of illumination.
   The test results of Figure 3 show that the graphene endows the phase-change material with photothermal conversion function, so that the aerogel phase-change composite material containing the graphene can be heated up to above 70°C within 30 min under simulated solar illumination, and can keep the temperature above 50°C for a long time, which has good photothermal conversion performance and heat-storage performance, and can realize the high-efficiency utilization of solar energy.
Figure 4 shows the recycle of the maleimide-based copolymer-graphene aerogel phase-change composite material (a) obtained in Example 2, as well as the graphene phase-change composite material (b) and the polymer aerogel (c) obtained from the recycle, which are described in Example 4. Clearly, the materials in the recyclable heat-storage phase-change composite material with photothermal conversion function in the present invention can be respectively recycled and reused.

### Detailed description of specific embodiments

The following is a specific description of the present invention in combination with specific examples. It is necessary to point out that the following examples are only used for further explanation of the present invention, and cannot be understood as limiting the scope of protection of the present invention. Some non-essential improvements and adjustments made by those skilled in the art based on the contents of the present invention still fall within the scope of protection of the present invention.

The present invention will be further described with reference to the following examples; however, the present invention is not limited to these examples.

The experimental data in the examples were determined using the following instruments and methods:
1. Test method of I_{D}/I_{G} in the Raman spectrum of aerogel:
   The test was carried out using a Lab RAM HR800 Raman spectrometer from HORIBA JOBIN YVON, and the curve was processed using the machine's built-in software, to obtain the I_{D} and I_{G} values.
2. Heat stability test method of aerogel:
   Taking 5 mg of the aerogel as a sample, the heat stability was tested by thermogravimetric analysis (TGA, Mettler Toledo, Switzerland). The test was carried out under a nitrogen flow with a heating rate of 20°C/min, and a temperature range from 50°C to 550°C.
3. Glass transition temperature test method of aerogel:
   The glass transition temperature of the sample was tested using a Perkin-Elmer pyris⁻¹ Differential Scanning Calorimeter (DSC), calibrated using indium and zinc standards. 5-6 mg of the sample from an injection rod was heated from 150°C to 300°C under a nitrogen flow, and held at 300°C for 3 minutes. Next, the sample was cooled to 150°C and held for 1 min, and then heated again to 300°C. The programmed speed for all heating and cooling processes was 10°C/min. The glass transition temperature (Tg) was determined from the relevant peak in the DSC curve.
4. Simulated solar illumination temperature change curve test method of phase-change material:
   The phase-change material was cut into sheets of 3 cm*3 cm*0.3 cm as test sample, and the solar illumination was simulated at 20°C using a solar simulator Sirius-SS300A-D manufactured by Zolix Instruments Co., Ltd. The sample was placed in a polystyrene foam box without a cap and the temperature change of the phase-change composite material was monitored throughout the process by a thermocouple. Firstly the sample was illuminated under an illumination intensity of 100 mW/cm² (one solar illumination intensity) for about 34 min, and then the simulated light source was turned off.
5. Leakage test method of phase-change material:
   15 g of the sample obtained in the example was taken, a filter paper was placed on a 120°C heating table, the sample was placed on the filter paper for 10 minutes, then the sample was taken off, and weighed as m (g), the leakage being m/15* 100wt%; if the sample was completely melted, and could not be taken off, then the leakage was 100 wt%.
6. Phase transition temperature test method:
   The thermal properties of the aerogel and the phase-change material were tested using a Perkin-Elmer pyris⁻¹ Differential Scanning Calorimeter (DSC), calibrated using indium and zinc standards. For the aerogel, the sample was heated from 20°C to 150°C under a nitrogen flow, and held at 20°C and 150°C for 5 min, respectively. For the phase-change material, the sample was heated from 50°C to 300°C under a nitrogen flow, and held at 50°C and 300°C for 5 min, respectively. The programmed speed for all heating and cooling processes was 20°C per min. The latent heat of fusion ΔHm and the latent heat of solidification ΔHf as well as the melting temperature Tm and the solidification temperature Tf were determined from the relevant peaks of the DSC curve.

The raw materials used in the examples are described in Table I.

**Table I**

| Name | Description |
|---|---|
| Isoamyl acetate | Sinopharm Chemical Reagent Co., Ltd., analytically pure |
| Maleic anhydride | Sinopharm Chemical Reagent Co., Ltd., analytically pure |
| Styrene | Xilong Chemical Co., Ltd., chemically pure |
| Azodiisobutyronitrile | Acros organics Co., purification was performed using a conventional ethanol recrystallization method |
| Methanol | Beijing Chemical Plant, analytically pure |
| Ethanol | Beijing Chemical Plant, analytically pure |
| Aqueous ammonia | Purchased from Sinopharm Chemical Reagent Co., Ltd., mass concentration 25% |
| Graphene oxide | Hangzhou Gaoxi Technology Co., Ltd., 20mg/ml aqueous dispersion |
| Ascorbic acid | analytically pure |
| Paraffin | Shanghai Aladdin Biochemical Technology Co., Ltd., pathological grade, melting point 62-64°C |
| Stearyl alcohol | Shanghai Aladdin Biochemical Technology Co., Ltd., purity 99% |

### Preparation Example 1

Preparation of polymer in the examples of the present invention: 500 ml of isoamyl acetate was placed in a 1000 ml three-necked flask, and nitrogen was charged to remove oxygen for 30 min. 24.5 g of maleic anhydride and 26 g of styrene were added to the flask. After complete dissolution, 0.4 g of azodiisobutyronitrile was added, and the temperature of water bath was raised to 70°C to carry out reaction for 7 h. After the reaction, the reaction solution was centrifuged at 10000 r for 10 min, the supernatant was removed, 500 ml of methanol was added, followed by stirring for 0.5 hours, and then the supernatant was removed after centrifugation, which were repeated twice. Thereafter, the reaction product was vacuum dried at 140°C for 24 h to obtain styrene-maleic anhydride copolymer.

### Example 1

To a glass bottle with a cap, 93.2 g of water was added, and then 2.8 g of aqueous ammonia with mass fraction of 25% and 4 g of maleic anhydride-styrene copolymer were added. After tightly screwing the cap, the glass bottle was put into an oven, kept at 95°C for 4 h, and then taken out to obtain a uniform polymer solution with mass fraction of 4%.

100 g of 20 mg/ml graphene oxide aqueous solution was added to the glass bottle, and then 4 g of ascorbic acid was added, followed by magnetically stirring for 5 min at 1000 r/min. After uniform mixing, the mixture was quickly poured into a cylindrical mold with a copper bottom surface and a polytetrafluoroethylene wall, and then the cylindrical mold was placed on a copper column in a liquid nitrogen bath. After completion of pre-freezing (namely the mixed liquor was frozen into ice), it was put into a freeze drier for freeze drying for 72 h (at a temperature of below -30°C and under a pressure of below 10 Pa) to obtain an anisotropic water-soluble GO/SMI composite aerogel.

Thereafter, the aerogel was placed in a polytetrafluoroethylene inner tank filled with nitrogen, and then the polytetrafluoroethylene inner tank was placed in a thermostat at a temperature of 180°C for heat treatment for 2 h. A sample was taken out, and placed in a closed quartz tank filled with nitrogen, to carry out microwave treatment (at an irradiation power of 800 W) for 3 s to obtain a maleimide styrene copolymer-graphene composite aerogel (namely the composite aerogel in the present invention).

### Example 2

Maleimide-graphene composite aerogel was prepared according to the method in Example 1. 0.2 g of the maleimide-graphene composite aerogel was added to a polytetrafluoroethylene beaker containing 20 g of sliced paraffin. The beaker was placed in a vacuum oven, and kept at 100°C for 2 h, allowing molten paraffin to permeate into the maleimide-graphene composite aerogel, so as to obtain an aerogel phase-change composite material. The aerogel phase-change composite material was taken out of the beaker, and then wiped to remove excessive phase-change material on the surface of the aerogel phase-change composite material, followed by standing at room temperature for 2 h, and weighing to obtain a maleimide-based copolymer-graphene aerogel phase-change composite material (adsorbed with about 10 g of paraffin).

### Example 3

The experiment was identical to that of Example 2 except that the phase-change material in Example 2 was changed from paraffin to stearyl alcohol (purchased from Aladdin).

The recycle effect of the obtained phase-change composite material is similar to that of Example 2.

### Example 4

The phase-change composite material sample obtained in Example 2 was ground into powder. 5 g of the powder was taken, and placed in a glass bottle with a cap, then 0.2 g of aqueous ammonia with mass fraction of 25% and 30 ml of water were added. The mixture was heated to 95°C, and kept for 1 h under the magnetic stirring condition of 1000 r/min. Thereafter, the mixture was filtered while hot (a in Figure 4), and then the filtrate was heated and concentrated to about 5 ml. The concentrated filtrate was placed in a mold, and the mold was placed in a refrigerator for pre-freezing, and then placed in a freeze drier for freeze drying (at a temperature of below -30°C and under a pressure of below 10 Pa) to obtain a recycled polymer aerogel (c in Figure 4). The filter cake was placed in a small beaker after natural drying, heated to 100 for melting, and kept for 1 h, followed by cooling to obtain a high value-added product graphene phase-change composite material, which was cut and shaped as required (b in Figure 4). Clearly, the material in the recyclable heat-storage phase-change composite material with photothermal conversion function in the present invention can be respectively recycled and reused.

### Example 5

To a glass bottle with a cap, 91.5 g of water was added, and then 3.5 g of aqueous ammonia with mass fraction of 25% and 5 g of maleic anhydride-styrene copolymer were added. After tightly screwing the cap, the glass bottle was put into an oven, kept at 95°C for 4 h, and then taken out to obtain a uniform polymer solution with mass fraction of 5%.

The polymer solution was poured into 6 molds in an amount of 15 ml for each mold, and then frozen for 2 h in a refrigerator at -30°C. The frozen sample was transferred into a freeze dryer for freeze-drying for 72 h (below -30°C and below 10 Pa) to obtain a water-soluble polymer aerogel. The water-soluble polymer aerogel was placed in a thermostat at a temperature of 180°C for heat treatment to dehydrate and deaminate to obtain a maleimide-based aerogel.

0.5 g of the maleimide-based polymer aerogel was added to a 30 ml polytetrafluoroethylene beaker containing 20 g of sliced paraffin. The beaker was placed in a vacuum oven, and kept at 100°C for 2 h, to obtain an aerogel phase-change composite material. The aerogel phase-change composite material was taken out of the beaker, and then wiped to remove excessive phase-change material on the surface of the aerogel phase-change composite material, followed by standing at room temperature for 2 h, and weighing to obtain a maleimide-based copolymer aerogel phase-change composite material (adsorbed with about 7 g of paraffin).

### Example 6

The preparation steps are identical to those of Example 1 except that the microwave treatment time in Example 1 was changed to 1 s.

### Example 7

To a glass bottle with a cap, 93.2 g of water was added, and then 2.8 g of aqueous ammonia with mass fraction of 25% and 4 g of maleic anhydride-styrene copolymer were added. After tightly screwing the cap, the glass bottle was put into an oven, kept at 95°C for 4 h, and then taken out to obtain a uniform polymer solution with mass fraction of 4%.

100 g of 20 mg/ml graphene oxide aqueous solution was added to the glass bottle, and then 4 g of ascorbic acid was added, followed by magnetically stirring for 5 min at 1000 r/min. After uniform mixing, the mixture was quickly poured into a cylindrical mold with a copper bottom surface and a polytetrafluoroethylene wall, and then the cylindrical mold was placed on a copper column in a liquid nitrogen bath. After completion of pre-freezing, the frozen mixture was put into a freeze drier for freeze drying for 72 h (below -30°C and below 10 Pa) to obtain an anisotropic water-soluble GO/SMI composite aerogel.

Thereafter, the aerogel was placed in a polytetrafluoroethylene inner tank filled with nitrogen, and then the polytetrafluoroethylene inner tank was placed in a thermostat at a temperature of 180°C for heat treatment for 2 h. A sample was taken out, and placed in a closed quartz tank filled with nitrogen, to carry out microwave treatment (at an irradiation power of 800 W) for 5 s to obtain a maleimide styrene copolymer-graphene composite aerogel.

### Example 8

To a glass bottle with a cap, 93.2 g of water was added, and then 2.8 g of aqueous ammonia with mass fraction of 25% and 4 g of maleic anhydride-styrene copolymer were added. After tightly screwing the cap, the glass bottle was put into an oven, kept at 95°C for 4 h, and then taken out to obtain a uniform polymer solution with mass fraction of 4%.

100 g of 20 mg/ml graphene oxide aqueous solution was added to the glass bottle, and then 4 g of ascorbic acid was added, followed by magnetically stirring for 5 min at 1000 r/min. After uniform mixing, the mixture was quickly poured into a cylindrical mold with a copper bottom surface and a polytetrafluoroethylene wall, and then the cylindrical mold was placed on a copper column in a liquid nitrogen bath. After completion of pre-freezing, the frozen mixture was put into a freeze drier for freeze drying for 72 h (below -30°C and below 10 Pa) to obtain an anisotropic water-soluble GO/SMI composite aerogel.

Thereafter, the aerogel was placed in a polytetrafluoroethylene inner tank filled with nitrogen, and then the polytetrafluoroethylene inner tank was placed in a thermostat at a temperature of 180°C for heat treatment for 2 h. A sample was taken out, and placed in a closed quartz tank filled with nitrogen, to carry out microwave treatment (at an irradiation power of 800 W) for 7 s to obtain a maleimide styrene copolymer-graphene composite aerogel.

### Example 9

To a reactor kettle with a polytetrafluoroethylene inner tank, 20.5 g of water was added, and then 4 g of aqueous ammonia with mass fraction of 25% and 0.5 g of maleic anhydride-styrene copolymer were added. The reactor kettle was put into an oven, kept at 150°C for 10 h, and then taken out to obtain a uniform polymer solution.

75 g of 40 mg/ml graphene oxide aqueous solution was added to the reactor kettle, and then 3 g of ascorbic acid was added, followed by magnetically stirring for 5 min at 1000 r/min. After uniform mixing, the mixture was quickly poured into a cylindrical mold with a copper bottom surface and a polytetrafluoroethylene wall, and then the cylindrical mold was placed on a copper column in a liquid nitrogen bath. After completion of pre-freezing, the frozen mixture was put into a freeze drier for freeze drying for 72 h (below -30°C and below 10 Pa) to obtain an anisotropic water-soluble GO/SMI composite aerogel.

Thereafter, the aerogel was placed in a polytetrafluoroethylene inner tank filled with nitrogen, and then the polytetrafluoroethylene inner tank was placed in a thermostat at a temperature of 200°C for heat treatment for 2 h. A sample was taken out, and placed in a closed quartz tank filled with nitrogen, to carry out microwave treatment (at an irradiation power of 500 W) for 3 s to obtain a maleimide styrene copolymer-graphene composite aerogel.

0.2 g of the maleimide-based polymer aerogel was added to a 30 ml polytetrafluoroethylene beaker containing 20 g of sliced paraffin. The beaker was placed in a vacuum oven, and kept at 100°C for 2 h, to obtain an aerogel phase-change composite material. The aerogel phase-change composite material was taken out of the beaker, and then wiped to remove excessive phase-change material on the surface of the aerogel phase-change composite material, followed by standing at room temperature for 2 h, and weighing to obtain a copolymer-graphene aerogel phase-change composite material (adsorbed with about 4 g of paraffin).

### Example 10

To a glass bottle with a cap, 91.5 g of water was added, and then 3.5 g of aqueous ammonia with mass fraction of 25% and 5 g of maleic anhydride-styrene copolymer were added. After tightly screwing the cap, the glass bottle was put into an oven, kept at 95°C for 4 h, and then taken out to obtain a uniform polymer solution with mass fraction of 5%. The polymer solution was dried at room temperature to obtain a polymer containing maleamic acid and ammonium maleate groups.

To a glass bottle with a cap, the obtained polymer was added, and then 41.5 g of water, 0.04 g of aqueous ammonia with mass fraction of 25% were added. After tightly screwing the cap, the glass bottle was put into an oven, kept at 20°C for 0.5 h, and then taken out to obtain a uniform polymer solution.

50 g of 6 mg/ml graphene oxide aqueous solution was added to the glass bottle, and then 0.9 g of ascorbic acid was added, followed by magnetically stirring for 5 min at 1000 r/min. After uniform mixing, the mixture was quickly poured into a cylindrical mold with a copper bottom surface and a polytetrafluoroethylene wall, and then the cylindrical mold was placed on a copper column in a liquid nitrogen bath. After completion of pre-freezing, the frozen mixture was put into a freeze drier for freeze drying for 72 h (below -30°C and below 10 Pa) to obtain an anisotropic water-soluble GO/SMI composite aerogel.

Thereafter, the aerogel was placed in a polytetrafluoroethylene inner tank filled with nitrogen, and then the polytetrafluoroethylene inner tank was placed in a thermostat at a temperature of 130°C for heat treatment for 2 h. A sample was taken out, and placed in a closed quartz tank filled with nitrogen, to carry out microwave treatment (at an irradiation power of 2000 W) for 3 s to obtain a maleimide styrene copolymer-graphene composite aerogel.

0.2 g of the maleimide-based polymer aerogel was added to a 30 ml polytetrafluoroethylene beaker containing 20 g of sliced paraffin. The beaker was placed in a vacuum oven, and kept at 100°C for 2 h, to obtain an aerogel phase-change composite material. The aerogel phase-change composite material was taken out of the beaker, and then wiped to remove excessive phase-change material on the surface of the aerogel phase-change composite material, followed by standing at room temperature for 2 h, and weighing to obtain a copolymer-graphene aerogel phase-change composite material (adsorbed with about 6 g of paraffin).

The phase transition temperature and the phase transition latent heat are similar to those in Example 2.

### Comparative Example 1

To a glass bottle with a cap, 91.5 g of water was added, and then 3.5 g of 25% aqueous ammonia and 5 g of maleic anhydride-styrene copolymer were added. After tightly screwing the cap, the glass bottle was put into an oven, kept at 95°C for 4 h, and then taken out to obtain a uniform polymer solution with mass fraction of 5%.

The polymer solution was poured into 6 molds in an amount of 15 ml for each mold, and then frozen for 2 h in a refrigerator at -30°C. The frozen sample was transferred into a freeze dryer for freeze-drying for 72 h (at a temperature of below - 30°C and under a pressure of below 10 Pa) to obtain a water-soluble polymer aerogel. The water-soluble polymer aerogel was placed in a thermostat at a temperature of 180°C for heat treatment for 2 h to dehydrate and deaminate to obtain a maleimide-based aerogel.

### Comparative Example 2

A 30 ml polytetrafluoroethylene beaker containing 20 g of sliced paraffin was placed in a vacuum oven, and kept at 100°C for 2 h. The material was taken out, followed by standing at room temperature for 2 h, to obtain a paraffin phase-change material (i.e., pure phase-change material).

### Test example

The I_{D}/I_{G} test results of the aerogels prepared in Example 1 and Example 6-8 are listed in Table 1, and the leakage situations of the phase-change materials prepared in Example 2, Comparative Example 2 and Example 5 are listed in Table 2; the DSC curves and glass transition temperatures Tg of Comparative Example 1 and Example 4 are shown in Figure 1; the thermogravimetric curves of Comparative Example 1 and Example 4 are shown in Figure 2; the temperature curves of the phase-change materials in Example 2 and Example 5 under one solar illumination intensity and after removal of illumination are shown in Figure 3.

The test results of Figure 3 show that the graphene endows the phase-change material with photothermal conversion function, so that the aerogel phase-change composite material containing the graphene can be heated up to above 70°C within 30 min, and can keep the temperature above 50°C for a long time, which has good photothermal conversion performance, and can realize the high-efficiency utilization of solar energy. The phase-change composite material in Example 6 was tested using the same method. The comparison between Example 2 and Example 6 shows that the photothermal conversion performance of the phase-change composite material in Example 2 is superior to that in Example 6.

**Table 1**

| Sample name | I_{D}/I_{G} |
|---|---|
| Example 1 | 0.85 |
| Example 6 | 1.07 |
| Example 7 | 0.88 |
| Example 8 | 0.91 |

The test results in Table 1 show that the composite aerogel prepared in the present invention has high reduction efficiency, and can reach a high reduction degree within 3 s, which is beneficial to rapid large-scale industrial preparation.

**Table 2**

| Sample name | Leakage |
|---|---|
| Example 2 | 1.8wt% |
| Comparative Example 2 | 100wt% |
| Example 5 | 3.1wt% |
| Example 3 | 1.2wt% |

The test results in Table 2 show that the aerogels have a good effect for leakage prevention of phase-change materials, and have a good application prospect.

**Table 3**

| Sample name | Melting temperature Tm (°C) | Latent heat of melting ΔHm (kJ/kg) | Solidification temperature Tf (°C) | Latent heat of solidification ΔHf (kJ/kg) |
|---|---|---|---|---|
| Example 2 | 62.4 | 204 | 55.0 | 199 |
| Comparative Example 2 | 63.1 | 214 | 55.7 | 208 |
| Example 9 | 61.7 | 196 | 54.3 | 192 |
| Example 3 | 60.5 | 235.3 | 57.1 | 224.8 |

It can be seen from the data in Table 3 that the porous aerogels result in a very little loss of latent heat of the phase-change materials, different organic phase-change materials can be used to prepare phase-change composite materials with high latent heat value, and the addition of the aerogels may slightly reduce the melting temperature and solidification temperature of phase-change materials.

It should be noted that the above-mentioned examples are only used to explain the present invention, and do not constitute any limitation to the present invention. The present invention has been described with reference to typical examples, but it should be understood that the words used herein are descriptive and explanatory words, rather than restrictive words. Modifications can be made to the present invention within the scope of the claims, and revisions can be made to the present invention without departing from the scope and spirit of the present invention. Although the present invention described herein relates to specific methods, materials, and examples, it does not mean that the present invention is limited to the specific examples disclosed herein. On the contrary, the present invention can be extended to all other methods and applications with the same functionality.

All publications, patent applications, patents, and other references mentioned in the present specification are herein incorporated by reference in their entirety. Unless defined otherwise, all technical and scientific terms used in the present specification have the same meaning as commonly understood by those skilled in the art. In case of conflict, the definitions in the present specification should prevail.

When in the present specification materials, substances, methods, steps, devices or components and the like are addressed using the prefix "known to those skilled in the art", "prior art" or the like, the objects so addressed not only encompass those commonly used in the art at the time of filing the present application, but also include those that are currently not commonly used but will be recognized in the art as suitable for similar purposes.

The endpoints of the ranges and any values disclosed in present application documents are not to be limited to the precise ranges or values, and these ranges or values should be understood to encompass values close to these ranges or values. For numerical ranges, the endpoint values of each range, the endpoint values of each range and individual point values, and individual point values can be combined with each other to obtain one or more new numerical ranges, which should be considered as specifically disclosed herein. In the following text, various technical solutions can be combined with each other in principle to obtain new technical solutions, which should also be considered as specifically disclosed herein.

In the context of the present specification, for any matters or issues not mentioned, what are known in the art shall apply directly without any changes, except where explicitly stated.

Moreover, any embodiments described herein can be freely combined with one or more other embodiments described herein, and the technical solutions or technical concepts resulting therefrom are all considered as part of the original disclosure or original description of the present invention, and should not be considered as new contents not disclosed or contemplated herein, unless those skilled in the art consider the combination to be clearly unreasonable.

## Claims

1. A composite aerogel, comprising a polymer and a graphene, wherein the polymer contains a maleic anhydride group-containing structural unit and a maleimide group-containing structural unit, wherein the maleic anhydride group refers to 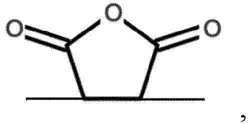 the maleimide group refers to

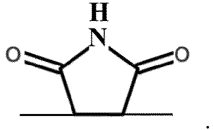

2. The composite aerogel as claimed in claim 1, **characterized in that**:
an average value of I_{D}/I_{G} in a Raman spectrum on the surface of the composite aerogel is 1.2 or less, preferably 0.9 or less, and more preferably 0.85 or less; and/or,
a mass ratio of the graphene to the polymer is (1: 20) - (10: 1), preferably (1: 10) - (6: 1), more preferably (1: 5) - (1: 1).

3. The composite aerogel as claimed in claim 1, **characterized in that**:
the polymer in the composite aerogel is capable of being dissolved in aqueous ammonia at 0-150°C to form a polymer aqueous solution; and/or,
the graphene is obtained by reducing a graphene oxide, preferably, by first pre-reducing the graphene oxide using a reducing agent and then reducing under microwave; more preferably,
the reducing agent is selected from at least one of ascorbic acid, gallic acid, sodium borohydride, amino acid.

4. The composite aerogel as claimed in claim 1, **characterized in that**:
a mole proportion of the maleimide group-containing structural unit in the polymer is 5%-70%, preferably 10%-60%, more preferably 20%-50%, based on 100% of the total mole amount of the maleic anhydride group-containing structural unit and the maleimide group-containing structural unit.

5. The composite aerogel as claimed in claim 1, **characterized in that**:
the polymer is derived from a polymer raw material containing one or more of maleic anhydride-, maleimide-, maleic acid and its ammonium salt-, maleamic acid and its ammonium salt-group-containing structural units; preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer is at least one of α-methyl styrene, styrene, isobutylene.

6. The composite aerogel as claimed in one of claims 1-5, **characterized in that**:
the composite aerogel is prepared by reacting a polymer raw material containing one or more of maleic anhydride-, maleimide-, maleic acid and its ammonium salt-, maleamic acid and its ammonium salt-group-containing structural units with aqueous ammonia under a closed condition, then mixing with a graphene oxide and a reducing agent, pre-freezing, freeze-drying, dehydrating and deaminating, and reducing.

7. A preparation method of the composite aerogel as claimed in one of claims 1-6, which comprises reacting a polymer raw material containing one or more of maleic anhydride-, maleimide-, maleic acid and its ammonium salt-, maleamic acid and its ammonium salt-group-containing structural units with aqueous ammonia under a closed condition, then mixing with a graphene oxide and a reducing agent, pre-freezing, freeze-drying, dehydrating and deaminating, and reducing to obtain the composite aerogel.

8. The preparation method as claimed in claim 7, **characterized in that** it comprises following steps:
(1) reacting the polymer raw material with aqueous ammonia under a closed condition to obtain a polymer aqueous solution;
(2) mixing the polymer aqueous solution obtained in step (1) with a graphene oxide and a reducing agent to obtain a mixed liquor, then pre-freezing and freeze-drying the mixed liquor, to obtain a composite polymer;
(3) subjecting the composite polymer obtained in step (2) to heat treatment, and then to microwave irradiation, to obtain the composite aerogel.

9. The preparation method as claimed in claim 8, **characterized in that**:
in step (1):
based on 100% of the total mass of the reaction system, the mass fraction of the polymer raw material is 0.1%-30%, preferably 0.5%-10%, more preferably 1%-5%, and the mass fraction of ammonia by mass of ammonia in aqueous ammonia is 0.001%-30%, preferably 0.01%-10%, more preferably 0.1%-1%, the balance being water; and/or,
the reaction conditions include that:
the reaction temperature is 0-200°C, preferably 50-150°C, more preferably 80-100°C, and/or, the reaction time is 0.01-100 h, preferably 0.5-10 h, more preferably 1-5 h.

10. The preparation method as claimed in claim 8, **characterized in that**:
in step (2):
the graphene oxide is derived from a dispersion containing the graphene oxide, and the concentration of the graphene oxide in the dispersion is 1-100 mg/mL, preferably 3-30 mg/mL, more preferably 5-20 mg/mL; and/or,
the reducing agent is selected from at least one of ascorbic acid, gallic acid, sodium borohydride, amino acid; and/or,
a mass ratio of the reducing agent to the graphene oxide is 1: (0.1-20), preferably 1: (1-3); and/or,
cold source temperatures in various directions of the mixed liquor during pre-freezing are the same or different, preferably, the cold source temperatures in various directions of the mixed liquor during pre-freezing are different; more preferably, the cold source temperatures in a single direction of the mixed liquor during pre-freezing are different; and/or,
the freeze-drying conditions include that: the temperature is -10°C or lower; and/or, the vacuum degree is 1000 Pa or lower.

11. The preparation method as claimed in claim 8, **characterized in that**:
in step (3):
the heat treatment conditions include that: a temperature is 100-300°C, preferably 120-220°C, more preferably 160-200°C; a heat treatment time is 0.1-10 h, preferably 0.5-3 h, more preferably 1-2 h; and/or,
the microwave irradiation power is 500-2000 W; the microwave irradiation time is 1-10 s, preferably 2-7 s, more preferably 3-5 s.

12. The preparation method as claimed in one of claims 7-11, **characterized in that**:
the polymer raw material is capable of being reacted with aqueous ammonia to obtain a water-soluble polymer; and/or,
the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer comprises at least one of α-methyl styrene, styrene, isobutylene;
preferably, the polymer raw material is at least one of styrene-maleic anhydride copolymer, maleic anhydride-isobutylene copolymer.

13. A recyclable heat-storage phase-change composite material, comprising a composite aerogel and a phase-change material loaded in the composite aerogel;
the composite aerogel is the composite aerogel as claimed in one of claims 1-6 or the composite aerogel prepared by the preparation method as claimed in one of claims 7-12.

14. The recyclable heat-storage phase-change composite material as claimed in claim 13, **characterized in that**:
a mass ratio of the composite aerogel to the phase-change material is 1: (0.05-50); and/or,
the phase-change material is an organic phase-change material, preferably a water-soluble phase-change materials and/or a non-water-soluble phase-change material, more preferably at least one of polyethylene glycol, lauric acid, stearyl alcohol, paraffin; and/or,
a leakage of the phase-change material in the recyclable heat-storage phase-change composite material is less than 10 wt%, preferably less than 5 wt%, more preferably less than 2 wt% under the temperature conditions where the phase-change material is in a liquid state.

15. A preparation method of the recyclable heat-storage phase-change composite material as claimed in claim 13 or 14, comprising loading the phase-change material in the composite aerogel;
preferably, the preparation method of the recyclable heat-storage phase-change composite material comprises: obtaining a composite aerogel using the preparation method as claimed in one of claims 7-12; and loading the phase-change material in the composite aerogel.

16. Application of the recyclable heat-storage phase-change composite material as claimed in claim 13 or 14 in the fields of building energy conservation, air conditioning systems, waste heat utilization and solar energy storage.
